# EUROPÄISCHE PATENTSCHRIFT

(11) **EP 1 190 906 B1**
(45) Veröffentlichungstag und Bekanntmachung des Hinweises auf die Patenterteilung: **23.02.2005**
(21) Anmeldenummer: 01115534.8
(22) Anmeldetag: 28.06.2001
(51) Int. Cl.: B60R 9/055

(54) **Halterungsvorrichtung, insbesondere für Dachkoffer**
Fastening device, especially for a roof box
Dispositif de fixation, en particulier pour un coffre de toit

(30) Priorität: 26.09.2000 DE 10048017
(43) Veröffentlichungstag der Anmeldung: 27.03.2002
(73) Patentinhaber: Thule GmbH & Co. KG, 92318 Neumarkt (DE)
(72) Erfinder: Behringer, Peter, 92339 Beilngries (DE); Konik, Bernd, 92355 Oberwiesenacker (DE)
(74) Vertreter: Matschkur, Lindner Blaumeier Patent- und Rechtsanwälte

(56) Entgegenhaltungen:
- EP-A- 0 983 903
- DE-C- 19 526 477
- DE-C- 19 626 482
- FR-A- 2 771 141

## Beschreibung

Die Erfindung bezieht sich auf eine Halterungvorrichtung, insbesondere zur lösbaren Befestigung von Dachkoffern an auf einem Fahrzeugdach befestigen Querträgern, mit den Boden des Dachkoffers durchsetzenden und nach oben verspannbaren U-förmigen Zugbügeln, wobei die Schenkel der Zugbügel jeweils mit einer Außenverzahnung versehen sind, in die die mit jeweils einer Gegenverzahnung versehenen Enden von gelenkig angelenkten Spannbacken angreifen, die durch einen Spannhebel aus einer Einschubstellung für die Schenkel des Zugbügels, in der die ineinandergreifenden Verzahnungen durch Ausweichen der Spannbacken nach außen eine Verschiebung der Zugbügel nach oben ermöglichen, in eine feste Eingriffstellung schwenkbar und anhebbar sind und die Spannbacken und Spannhebel in einem Außengehäuse gelagert sind, das vorzugsweise in Längsschlitzen des Kofferboden verschiebbar geführt ist.

Bei einer aus DE 195 26 477 C1 bekannt gewordenen Halterungsvorrichtung der vorstehend beschriebenen Art sind die Spannbacken gelenkig aneinander angelenkt und der Spannhebel greift in diesem Gelenk an wobei der eine Spannbacken mit seiner Gegenverzahnung an der Außenverzahnung des einen Schenkels des Zugbügels und der andere mit seiner Gegenverzahnung an der Außenverzahnung des anderen Schenkels des Zugbügels angreift. Diese Halterungsvorrichtung die sich in der Praxis außerordentlich bewährt hat bereitet allerdings dann Schwierigkeiten wenn die von den U-förmigen Bügeln zu überbrückende Breite der Querträger recht groß ist, da in diesem Fall dann die Länge der Spannbacken und die notwendigen Angriffswinkel dazu führen, dass die Halterungsvorrichtung sehr großräumig und vor allen Dingen hochbauend ausfällt.

Vergleichbare Probleme ergeben sich auch aus einer aus der DE 198 26 630 bekannt gewordenen Halterungsvorrichtung, bei der nur ein Schenkel eines Zugbügels von gegenüberliegendenden Seiten durch die beiden Spannbacken erfasst wird während der zweite Schenkel entweder überhaupt nicht aktiv erfasst und mit angehoben wird, oder aber hierfür über ein Quergestänge verschiebbare Spannbackenpaare vorgesehen sind. Bei sehr breiten Querträgern genügt es nicht mit Hilfe eines L-förmigen Zugbügels die Verspannung vorzunehmen sondern man braucht auch dort einen U-förmigen Zugbügel und die Gestängeverbindung zu dem zweiten Spannbackenpaar für den zweiten Schenkel des U-förmigen Zugbügels lässt sich bei den angesprochenen großen Abmessungen wiederum nur sehr schwierig realisieren. Hinzu kommt, dass auch bei Verspannung des zweiten Schenkels der Angriffspunkt des Spannhebels bei dieser Halterungsvorrichtung im Wesentlichen über einen der Schenkel liegt, sodass eine symmetrische Verspannung beider Schenkel nach oben die für eine sichere Funktionsweise von großer Bedeutung ist (und wie sie bei der DE 195 26 477 C1 vorhanden ist) nicht erreichbar ist.

Der Erfindung liegt daher die Aufgabe zugrunde, eine Halterungsvorrichtung der eingangs beschriebenen Art so auszugestalten, dass eine symmetrische gleichzeitige Erfassung und Anhebung der beiden Schenkel eines U-förmigen Zugbügels mit Hilfe des Spannhebels möglich ist, die in einfacher Weise und ohne Vergrößerung der Bauhöhe auch für große Breiten der Querträger auf dem Fahrzeugdach realisierbar ist.

Zur Lösung dieser Aufgabe ist erfindungsgemäß vorgesehen, dass zwei langgestreckte parallel zum Zugbügelbasisschenkel auf unterschiedlichen Seiten des Zugbügels verlaufende Spannbacken jeweils gleichzeitig in beide Schenkel des Zugbügels eingreifende beabstandete Gegenverzahnungen aufweisen.

Im Gegensatz zur Anordnung nach der DE 198 26 630 A1 sind nicht zwei getrennte Spannbackenpaare vorgesehen, von denen das eine Paar einen Schenkel und das andere Paar den anderen Schenkel des U-förmigen Zugbügels erfasst, sondern man hat nur ein Paar langgestreckter Spannbacken, in denen jeweils im Abstand der Schenkel des U-förmigen Spannbügels Verzahnungsabschnitte eingebracht sind, sodass der eine Spannbacken von der einen Seite in beide Schenkel und der andere von der anderen Seite in die beiden Schenkel des u-förmigen Spannbackens eingreifen kann. Dies wiederum eröffnet die Möglichkeit, durch symmetrisches Angreifen an den Spannbacken eine symmetrische gleichzeitige Kraftbeaufschlagung beider Schenkel des Spannbügels zu erreichen, was bei der Konstruktion der eingangs angesprochenen Patentanmeldung nicht der Fall ist.

Mit besonderem Vorteil sollen dabei in Ausgestaltung der Erfindung die Spannbacken endseitig in die Anhebeverschiebung ermöglichender Nuten oder Langlöchern schwenkgelagert und durch sie untergreifende gelenkig gelagerte, von einem im wesentlichen U-förmigen vom Spannhebel betätigbaren Spanngehäuse verschwenkten Wippen anhebbar sind. Die Nuten können dabei in den Stirnwänden des Außengehäuses und / oder des Spannnngehäuses angeordnet sein

Mit besonderem Vorteil kann dies in der Weise erfolgen, dass das Spanngehäuse mit inneren, die Spannbacken in Eingriff mit den Schenkeln des Zugbügels verschwenkenden Auflaufschrägen versehen ist und dass die Abmessungen so getroffen sind, dass erst nach dem Eingreifen der Spannbacken in die Schenkel des Zugbügels die Längswände des Spanngehäuses auf den Außenschenkeln der Wippen aufsetzen und damit durch Verschwenken dieser Wippen die Spannbacken mit dem Zugbügel nach oben anheben. Dadurch wird der Boden des Dachkoffers zwischen dem Außengehäuse der Halterungsvorrichtung und dem Querträger auf dem Fahrzeugdach verspannt.

In Weiterbildung der Erfindung kann dabei vorgesehen sein, dass die Wippen eine im Querschnitt kreisbogenförmige Lagerrippe aufweist, die jeweils in einer entsprechend geformten Lagernut des Bodens des Außengehäuses schwenkgelagert ist. Durch diese Lagerrippe und die daraus resultierende langgestreckte Abstützung lassen sich große Kräfte ohne die Gefahr eines Durchbiegens oder Brechens der Wippe auf die Spannbacken übertragen und somit hohe Spannkräfte der Halterungsvorrichtung erzielen. Dabei hat es sich als sehr vorteilhaft erwiesen, wenn die Wippen noch zusätzlich durch endseitige Drehlager im Außengehäuse gelagert sind, wobei diese Drehlager beim Vorsehen der Lagerrippen nurmehr als Sicherungselemente zu fungieren brauchen, die ein Herausfallen aus den Lagernuten verhindern. Die eigentliche Lagerfunktion ist von diesen endseitigen Drehlagern abgekoppelt.

Um ein sicheres vereinfachtes Lösen beim Hochschwenken, also beim Öffnen, des Spannhebels zu erzielen, ist gemäß einem weiteren Merkmal der vorliegenden Erfindung vorgesehen, dass der am Außengehäuse drehgelagerte Spannhebel mit einem zur Lagerachse parallel verlaufenden, in dessen Spannstellung im Wesentlichen senkrecht unter diesem verlaufenden Mitnehmerbolzen versehen ist, der zur Anhebung des Spanngehäuses beim Schwenken des Spannbackens in dessen Öffnungsstellung ebenso wie die Lagerachse in L-Nuten der Längswände des im Wesentlichen U-förmigen Spanngehäuses eingreift.

Bei der Öffnungsverschwenkung des Spannhebels, die durch einen am Spannhebel angeformten keilförmigen Löseansatz, der zum Auseinanderschwenken der Spannbacken in deren Lösestellung beim Öffnen des Spannhebels dient, unterstützt werden kann, wird im Anfangsbereich der Öffnungsverschwenkung der angesprochenen Mitnehmerbolzen zunächst in den horizontalen Schenkel der L-Nuten verschoben, um beim Weiterschwenken an der Oberkante der Nut anzustoßen und dann das Spanngehäuse mit anzuheben, sodass die Spannbelastung der Wippen völlig aufgehoben ist.

Dabei liegt es schließlich auch im Rahmen der Erfindung, dass der Spannhebel im Lagerbereich mit Exzenternocken zum Verspannen des Spanngehäuses nach unten in die Eingriffsstellung mit den Außenschenkeln der Wippen versehen ist, wobei bevorzugt die obere Deckwand des Spanngehäuses im Lagerbereich des Spannhebels mit einer Querausnehmung versehen ist, sodass die seitlichen Exzenternocken auf den freien Oberkanten der Längswände des Spanngehäuses angreifen können.

Um mit erfindungsgemäßen Haltevorrichtungen versehene Dachkoffer auf unterschiedlich beabstandeten Querträgern befestigen zu können und somit den Dachkoffer für praktisch sämtliche Automodelle einsetzen zu können, ist der Boden des Dachkoffers bevorzugt mit Längsschlitzen versehen, in denen die U-förmigen Zugbügel zur Anpassung an die jeweiligen Abstände der Querträger verschiebbar sind. In Ausgestaltung der Erfindung sollen die Schenkel des Zugbügels eine unter dem Boden des Außengehäuses angeordnete Dichtschiene durchsetzen, welchen mit dem Zugbügel verschiebbar den Längsschlitz des Kofferbodens abdichtet, wobei die Dichtschiene auch mehrteilig mit teleskopisch gegeneinander verschiebbaren Teilen ausgebildet sein kann, da auf diese Art und Weise auch sehr lange Bodenstütze dichtend überbrückbar sind. Gegebenenfalls könnten statt der Längsschlitze auch beabstandete Lochbilder vorgesehen sein.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: Eine perspektivische Ansicht einer erfindungsgemäßen Halterungsvorrichtung in der Spannstellung auf einem nur im Ausschnitt gestrichelt angedeuteten Querträger, wobei natürlich die zwischen der Halterungsvorrichtung und dem Träger vorgesehene Bodenwand des zu haltenden Bauteils, also insbesondere eines Dachkoffers, der Übersichtlichkeit halber überhaupt nicht mit eingezeichnet ist,
- Fig. 2: einen Schnitt längs der Linie II-II in Fig. 1,
- Fig. 3: einen Längsschnitt längs der Linie III-III Fig. 1,
- Fig. 4: einen gegenüber dem Mittellängsschnitt nach Fig. 3 seitlich versetzten Teillängsschnitt durch die Halterungsvorrichtung nach Fig. 1, und
- Fig. 5 bis 7: dem Schnittbild nach Fig. 2 entsprechende Schnittbilder ohne das Außengehäuse in unterschiedlichen Schwenkstellungen des Spannhebels und damit unterschiedlichen Eirigriffsstellungen der Spannbacken und der Wippen.

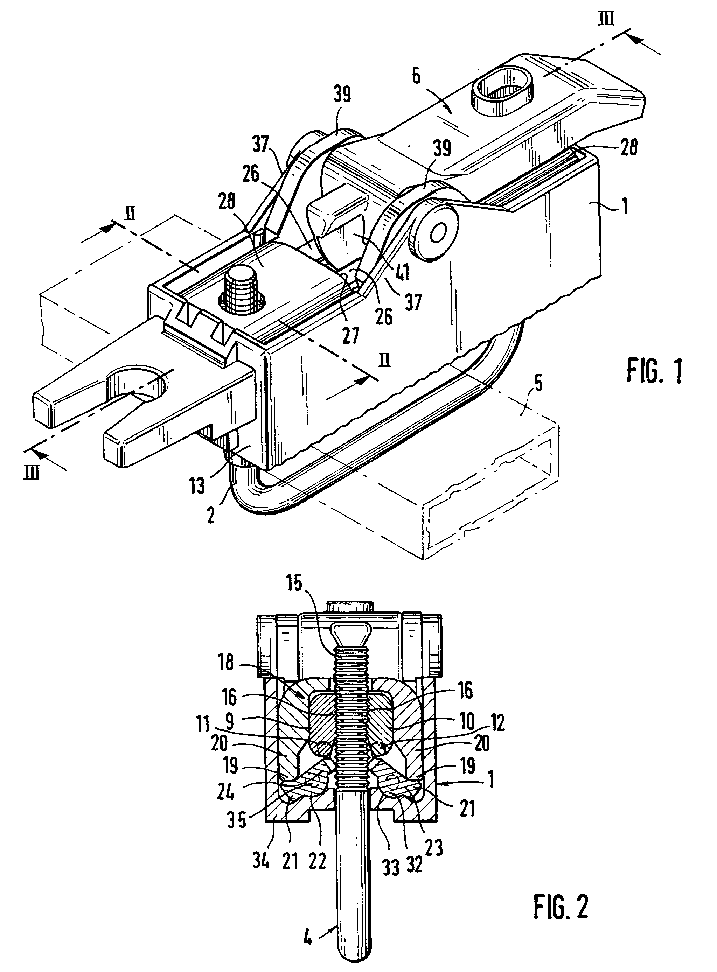

In Fig. 1 ist mit 1 das Außengehäuse einer erfindungsgemäßen Halterungsvorrichtung bezeichnet, welches auf der Innenseite beispielsweise eines Dachkoffers angeordnet ist, wobei die Schenkel 2 und 3 eines U-förmigen Spannbügels 4 den Kofferboden in Längsschlitzen (oder bei einer Nichtverschiebbarkeit zur Anpassung an unterschiedliche Querträgerabstände auch nur Bohrungen) des Kofferbodens durchsetzen. Der U-förmige Zugbügel 4 umgreift einen Querträger 5 über dem Fahrzeugdach, wobei die Ausbildung so getroffen ist, dass mit dem Schließen des Spannhebels 6 in die in den Fig. 1 und 2 gezeigte Spannstellung der Zugbügel nach oben gezogen wird, sodass der Kofferboden 7 zwischen dem Außengehäuse 1 (im vorliegenden Fall unter Zwischenordnung einer Dichtleiste 8) auf den Querträger 5 gepresst und mit diesem verspannt wird.

Im Außengehäuse 1 sind zwei langgestreckte Spannbacken 9 und 10 schwenkbar gelagert, wozu endseitige Lagerzapfen 11 und 12 in vertikale Lagernuten oder Langlöcher der Stirnwände 13 und 14 des Außengehäuses 1 angreifen. Diese langgestreckten Spannbacken 9 und 10 verlaufen parallel zur Bügelebene, sodass der eine von der linken Seite an beiden Schenkeln 2 und 3 des Zugbügels 4 angreifen kann und der andere von der Gegenseite. Beide Spannbacken 9 und 10 sind mit zwei zur Verzahnung 15, die durch Nuten oder auch Gewindegänge ausgebildet sein kann, komplementären Gegenverzahnungen 16 versehen, die im Abstand der Schenkel 2 und 3 angeordnet sind, wobei diese Gegenverzahnungen in die Schenkel teilweise umfassende Rinnen 17 eingebracht ist.

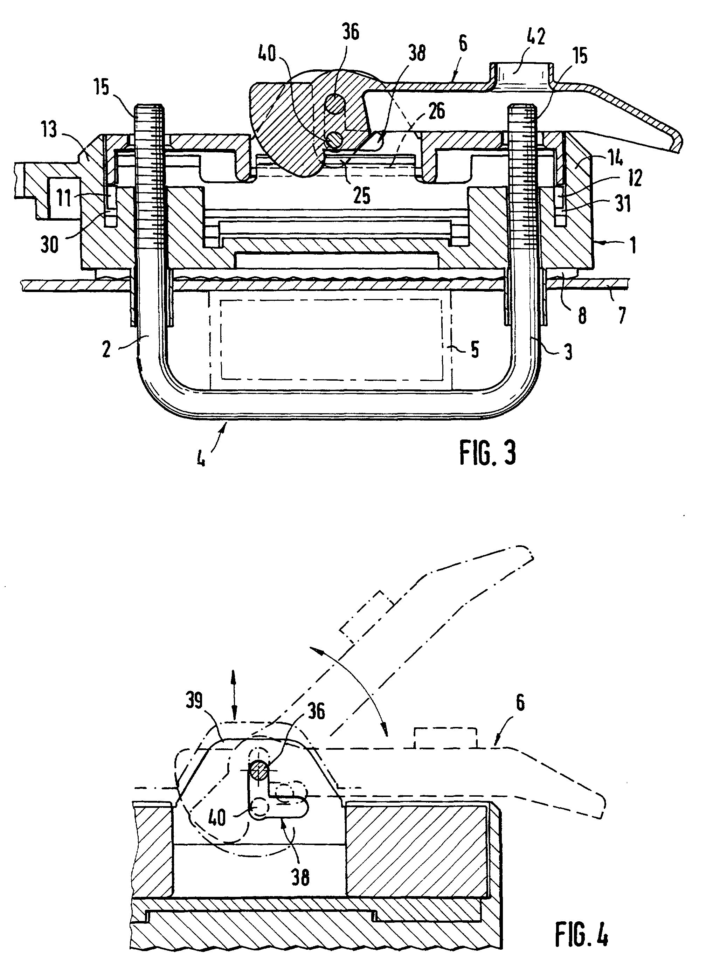

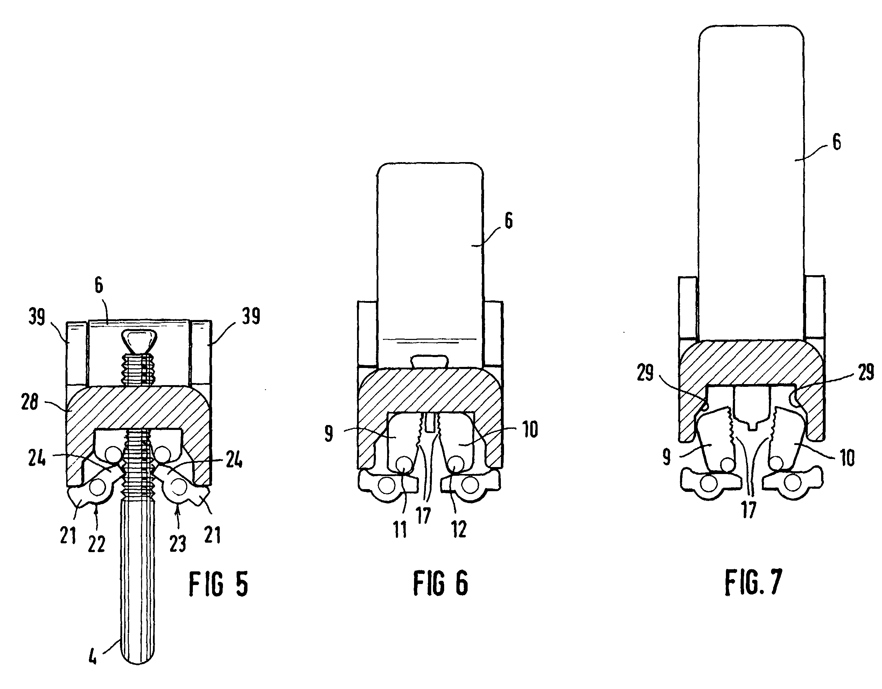

Das im Wesentlichen U-förmige mit dem bereits angesprochenen Stirnwänden 14 und 13 versehene Spanngehäuse 18 greift mit den Unterkanten 19 seiner Längswände 20 an den Außenschenkeln 21 zweier im Außengehäuse 1 schwenkgelagerter Wippen 22 und 23 an, die mit ihren inneren Schenkeln 24 die Spannbacken 9 und 10 untergreifen. Beim Schließen des Spannhebels 6 aus der in Fig. 7 gezeigten Öffnungsstellung über die Zwischenstellungen gemäß Fig. 6 und (strichpunktiert) in Fig. 4 drücken Exzenternocken 25 die im Lagerbereich des Spannhebels 6 angeformt sind auf die Oberkanten 26 der Längswände 20 des Spanngehäuses 18, die in diesem Bereich durch eine Aussparung 27 der oberen Deckwand 28 des Spanngehäuses freigelegt sind. Damit wird das Spanngehäuse 18 nach unten gedrückt und verschwenkt zunächst mit innen angeformten Auflaufschrägen 29 die Spannbacken 9 und 10 von der in Fig. 7 gezeigten Öffnungsstellung in die die Außenverzahnung 15 der Schenkel 2, 3 des Zugbügels 4 erfassende Haltestellung bei der die Gegenverzahnungen 16 in die Außenverzahnungen 15 eingreifen. Beim weiteren Herunterdrücken des Spannhebels aus der Position wie sie strichpunktiert in Fig. 4 gezeigt ist und wie sie auch in Fig. 6 wiedergegeben ist, setzen die Unterkanten 19 der Außenwände 20 des Spanngehäuses auf den bereits angesprochenen Außenschenkeln 21 der Wippen 22 und 23 auf und verschwenken diese in die Position gemäß den Fig. 2 und 5, sodass die Spannbacken 9 und 10 nach oben gezogen werden und damit auch den Zugbügel 4 entsprechend nach oben verspannen. Die Zapfen 11 und 12 der Spannbacken 9 und 10 sind dabei in Langlöchern oder Schlitze 30, 31 der Stirnwände 13 und 14 geführt, sodass sie die Relativbewegung nach oben wie sie anhand der Fig. 5-7 besonders gut zu erkennen ist auch tatsächlich durchführen können.

Die Wippen 22 und 23 sind unterseitig mit im Querschnitt kreisbogenförmigen Lagerrippen 32 versehen, die in entsprechend geformte Lagernuten 33 des Bodens 34 des Außengehäuses 1 eingreifen. Zusätzlich können sie noch durch endseitige Drehlager mit Zapfen 35 in den Stirnwänden des Außengehäuses gelagert sein um ein Herausfallen zu verhindern. Die eigentliche Abstützung bei der Verschwenkung erfolgt aber über die kreisbogenförmigen Lagerrippen, die Übertragung großer Kräfte zulassen.

Die Lagerwelle 36 mit der der Spannhebel 6 an den hochstehenden Ohren 37 des Außengehäuses 1 gelagert ist durchsetzt L-förmige Nutdurchbrechungen von am Spanngehäuse 28 angeformten Laschen 39. Im Spannhebel 6 ist darüber hinaus ein Mitnehmerbolzen 40 angeordnet, der die Laschen 39 des Spanngehäuses ebenfalls in den L-Nuten 38 durchsetzt wie dies in Fig. 3 am besten zu erkennen ist.

Beim Hochschwenken des Spannhebels 6 aus der Spannstellung nach Fig. 3 in eine in Fig. 4 strichpunktiert gezeigte Zwischenlösestellung tritt der Mitnehmerbolzen 40 in den unteren waagrechten Schenkel der L-Nut 38 ein und legt sich an deren Oberkante an um bei der anschließenden Schwenkbewegung nach oben dann das Spanngehäuse 18 mit nach oben zu schwenken und damit die Wippen 22 und 23 wieder frei zu geben. Ein keilförmiger Löseansatz 41 am Spannhebel 6 greift dabei von oben zwischen die Spannbacken 9 und 10 ein und drückt sie auseinander, sodass sie außer Eingriff mit der Außenverzahnung 15 der Schenkel 2 und 3 des Zugbügels 4 gelangen. Der Zugbügel ist dann in dieser Lösestellung frei nach oben und unten verstellbar. Bei 42 ist eine Öffnung im Spannhebel 6 vorgesehen, durch die bei längeren Schenkeln 2 und 3 oder geringerer Höhe der Dachträger 5 der entsprechende Schenkel 3 nach oben aus dem Spannhebel 6 heraustreten kann, sodass also dessen Schwenkbewegung nicht durch den sehr weit nach oben überstehenden Schenkel behindert werden kann.

## Patentansprüche

1. Halterungsvorrichtung, insbesondere zur lösbaren Befestigung von Dachkoffern an auf einem Fahrzeugdach befestigen Querträgern (5), mit den Kofferboden (7) des Dachkoffers durchsetzenden und nach oben verspannbaren U-förmigen Zugbügeln (4), wobei die Schenkel (2, 3) der Zugbügel (4) jeweils mit einer Außenverzahnung (15) versehen sind, in die die mit jeweils einer Gegenverzahnung versehenen Enden von gelenkig angelenkten Spannbacken (9, 10) angreifen, die durch einen Spannhebel (6) aus einer Einschubstellung für die Schenkel (2, 3) des Zugbügels (4), in der die ineinandergreifenden Verzahnungen (15, 16) durch Ausweichen der Spannbacken (9, 10) nach außen eine Verschiebung der Zugbügel (4) nach oben ermöglichen, in eine feste Eingriffstellung schwenkbar und anhebbar sind und die Spannbacken (9, 10) und Spannhebel (6) in einem Außengehäuse (1) gelagert sind, das vorzugsweise in Längsschlitzen des Kofferbodens (7) verschiebbar geführt ist, **dadurch gekennzeichnet, dass** zwei langgestreckte parallel zum Zugbügelbasisschenkel (4') auf unterschiedlichen Seiten des Zugbügels verlaufende Spannbacken (9, 10) jeweils gleichzeitig in beide Schenkel (2, 3) des Zugbügels (4) eingreifende beabstandete Gegenverzahnungen (16) aufweisen.

2. Halterungsvorrichtung nach Anspruch 1, **dadurch gekennzeichnet, dass** die Spannbacken (9, 10) endseitig in, die Anhebeverschiebung ermöglichenden, Nuten oder Langlöchern (30 ,31) des Außengehäuses (1) schwenkgelagert und durch sie untergreifende, gelenkig gelagerte, von dem i. W. U-förmigen vom Spannhebel (6) betätigbaren Spanngehäuse (18) verschwenkten Wippen (22, 23) anhebbar sind.

3. Halterungsvorrichtung nach Anspruch 2, **dadurch gekennzeichnet, dass** das Spanngehäuse (18) mit inneren, die Spannbacken (9, 10) in Eingriff mit den Schenkeln (2, 3) des Zugbügels (4) verschwenkenden Auflaufschrägen (29) versehen ist und dass die Abmessungen so getroffen sind, dass erst nach dem Eingreifen der Spannbacken (9, 10) die Längswände (20) des Spanngehäuses (18) auf den Außenschenkeln (21) der Wippen (22, 23) aufsetzen.

4. Halterungsvorrichtung nach Anspruch 2 oder 3, **dadurch gekennzeichnet, dass** die Wippen (22, 23) eine im Querschnitt kreisbogenförmige Lagerrippe (32) aufweisen, die jeweils in einer entsprechend geformten Lagernut (33) des Bodens (34) des Außengehäuses (1) schwenkgelagert ist.

5. Halterungsvorrichtung nach einem der Ansprüche 2 bis 4, **dadurch gekennzeichnet, dass** die Wippen (22, 23) durch endseitige Drehlager (35) im Außengehäuse (1) gelagert sind.

6. Halterungsvorrichtung nach einem der Ansprüche 1 bis 5, **dadurch gekennzeichnet, dass** der am Außengehäuse (1) drehgelagerte Spannhebel (6) mit einem zur Lagerachse (36) parallel verlaufenden, in dessen Spannstellung i. W. senkrecht unter diesem verlaufenden Mitnehmerbolzen (40) versehen ist, der zur Anhebung des Spanngehäuses (18) beim Verschwenken des Spannhebels in dessen Öffnungsstellung ebenso wie die Lagerachse (36) in L-Nuten der Längswände (20) des i. W. U-förmigen Spanngehäuses (18) eingreift.

7. Halterungsvorrichtung nach einem der Ansprüche 1 bis 6, **dadurch gekennzeichnet, dass** der Spannhebel (6) im Lagerbereich mit Exzenternocken (25) zum Verspannen des Spanngehäuses (18) nach unten in die Eingriffsstellung mit den Außenschenkeln der Wippen (22, 23) versehen ist.

8. Halterungsvorrichtung nach Anspruch 7, **dadurch gekennzeichnet, dass** die obere Deckwand (28) des im Lagerbereich des Spannhebels (6) mit einer Querausnehmung (27) versehen ist, sodass die seitlichen Exzenternocken (25) auf den freien Oberkanten (26) der Längswände (20) des Spanngehäuses (18) angreifen können.

9. Halterungsvorrichtung nach einem der Ansprüche 1 bis 8, **dadurch gekennzeichnet, dass** am Spannhebel (6) ein keilförmiger, zum Auseinanderschwenken der Spannbacken (9, 10) in deren Lösestellung beim Öffnen des Spannhebels (6) dienender Löseansatz angeformt ist.

10. Halterungsvorrichtung nach einem der Ansprüche 1 bis 9, **dadurch gekennzeichnet, dass** die Schenkel (2, 3) des Zugbügels (4) eine unter dem Boden des Außengehäuses angeordnete Dichtschiene (8) durchsetzen, welche mit dem Zugbügel (4) verschiebbar den Längsschlitz des Kofferbodens (7) abdichtet.

11. Halterungsvorrichtung nach Anspruch 10, **dadurch gekennzeichnet, dass** die Dichtschiene mehrteilig mit teleskopisch gegeneinander verschiebbaren Teilen ausgebildet ist.

## Claims

1. Fastening device, in particular for the detachable fixing of roof boxes to cross-supports (5) fixed to a vehicle roof, having U-shaped tie shackles (4) penetrating the box base (7) of the roof box and bracing the same at the top, the arms (2, 3) of the tie shackles (4), each being provided with male splining (15), into which the ends (provided with respective counter-splining) of clamping jaws (9, 10) coupled in an articulated manner are inserted, the clamping jaws being pivotable and liftable by a clamping lever (6) from an insertion position for the arms (2, 3) of the tie shackle (4), in which the interlocking splining (15, 16) permits upward displacement of the tie shackle (4) by outward escapement of the clamping jaws (9, 10), into a fixed engagement position, the clamping jaws (9, 10) and clamping lever (6) being mounted in an outer housing (1) which is preferably displaceably guided in longitudinal slots of the box base (7), **characterised in that** two elongate clamping jaws (9, 10) extending parallel to the tie shackle base side (4') on different sides of the tie shackle have respective spaced counter-splining (16) which engages simultaneously in both arms (2, 3) of the tie shackle (4).

2. Fastening device according to claim 1, **characterised in that** the clamping jaws (9, 10) are pivotably mounted at one end in grooves or slots (30, 31) of the outer housing (1) for permitting the lifting displacement, and rockers (22, 23), which engage under the same and are mounted in an articulated manner and are pivoted by the substantially U-shaped clamping housing (18) actuatable by the clamping lever (6).

3. Fastening device according to claim 2, **characterised in that** the clamping housing (18) is provided with inner stop slopes (29) pivoting the clamping jaws (9, 10) in engagement with the arms (2, 3) of the tie shackle (4) and **in that** the dimensions are such that not until engagement of the clamping jaws (9, 10) do the longitudinal walls (20) of the clamping housing (18) rest on the outer arms (21) of the rockers (22, 23).

4. Fastening device according to claim 2 or 3, **characterised in that** the rockers (22, 23) have a bearing ridge (32) which is arcuate in cross-section and which is pivotably mounted in a correspondingly formed bearing groove (33) of the base (34) of the outer housing (1).

5. Fastening device according to one of claims 2 to 4, **characterised in that** the rockers (22, 23) are mounted in the outer housing (1) by rotary bearings (35) at the ends.

6. Fastening device according to one of claims 1 to 5, **characterised in that** the clamping lever (6) mounted pivotably on the outer housing (1) is provided with a driver (40) extending parallel to the bearing axis (36) and extending substantially perpendicular below the same in its clamping position, the driver (40) engaging for lifting of the clamping housing (18) upon pivoting of the clamping lever into its open position, as does the bearing axis (36), in L-shaped grooves in the longitudinal walls (20) of the substantially U-shaped clamping housing (18).

7. Fastening device according to one of claims 1 to 6, **characterised in that** the clamping lever (6) is provided in the bearing region with eccentric cams (25) for clamping the clamping housing (18) down into the engagement position with the outer arms of the rockers (22, 23).

8. Fastening device according to claim 7, **characterised in that** the upper covering wall (28) of the clamping housing (18) in the bearing region of the clamping lever (6) is provided with a transverse recess (27), so that the lateral eccentric cams (25) can act on the free upper edges (26) of the longitudinal walls (20) of the clamping housing (18).

9. Fastening device according to one of claims 1 to 8, **characterised in that** a wedge-shaped release stop for the pivoting apart of the clamping jaws (9, 10) into their release position when the clamping fever (6) is opened is integrally moulded on the clamping lever (6).

10. Fastening device according to one of claims 1 to 9, **characterised in that** the arms (2, 3) of the tie shackle (4) penetrate a sealing rail (8) which is disposed under the base of the outer housing and which with the tie shackle (4) displaceably seals the slot in the box base (7).

11. Fastening device according to claim 10, **characterised in that** the sealing rail is formed in plural parts which may be displaced telescopically relative to one another.

## Revendications

1. Dispositif de fixation, en particulier pour la fixation amovible de coffres de toit contre des traverses (5) fixées sur le toit d'un véhicule automobile, avec des étriers d'assemblage (4) en forme de U traversant le fond (7) du coffre de toit et propres à être ancrés vers le haut, les branches (2, 3) des étriers d'assemblage (4) étant munies chacune d'une denture extérieure (15) dans laquelle engrènent les extrémités à denture complémentaire de mâchoires de serrage (9, 10), qui sont montées de manière articulée et qui, par l'intermédiaire d'un levier de serrage (6), peuvent pivoter et se soulever hors d'une position d'introduction pour les branches (2, 3) de l'étrier d'assemblage (4), dans laquelle les dentures (15, 16) engrenant l'une dans l'autre permettent par un écartement des mâchoires de serrage (9, 10) vers l'extérieur un coulissement des étriers d'assemblage (4) vers le haut, dans une position de prise ferme, et les mâchoires de serrage (9, 10) et le levier de serrage (6) sont logés dans un boîtier extérieur (1), qui est monté coulissant de préférence dans des fentes longitudinales ménagées dans le fond du coffre (7), **caractérisé en ce que** deux mâchoires de serrage (9, 10) allongées, s'étendant sur différents côtés de l'étrier d'assemblage parallèlement aux branches de base (4') des étriers, comportent des dentures complémentaires (16) écartées l'une de l'autre, engrenant simultanément dans les deux branches (2, 3) de l'étrier d'assemblage (4).

2. Dispositif de fixation selon la revendication 1, **caractérisé en ce que** les mâchoires de serrage (9, 10) du côté de l'extrémité sont montées pivotantes contre le boîtier extérieur (1) dans des rainures ou trous oblongs (30, 31), ménagées dans le boîtier extérieur (1) et permettant le mouvement vers le haut, et lesdites mâchoires de serrage sont aptes à être déplacées vers le haut par des bascules (22, 23) s'engageant en dessous d'elles, montées articulées, entraînées en pivotement par la cage de serrage (18) sensiblement en forme de U et apte à être actionnée par le levier de serrage (6).

3. Dispositif de fixation selon la revendication 2, **caractérisé en ce que** la cage de serrage (18) est munie de rampes d'introduction (29) intérieures, faisant pivoter les mâchoires de serrage (9, 10) pour entrer en prise avec les branches (2, 3) de l'étrier d'assemblage (4), et **en ce que** les dimensions sont choisies de telle sorte que seulement après l'entrée en prise des mâchoires de serrage (9, 10), les parois longitudinales (20) de la cage de serrage (18) sont en appui sur les branches extérieures (21) des bascules (22, 23).

4. Dispositif de fixation selon la revendication 2 ou 3, **caractérisé en ce que** les bascules (22, 23) comportent une ailette d'appui (32) avec une section en forme d'arc de cercle, qui est montée pivotante respectivement dans une rainure d'appui (33) de forme correspondante, ménagée dans le fond (34) du boîtier extérieur (1).

5. Dispositif de fixation selon l'une quelconque des revendications 2 à 4, **caractérisé en ce que** les bascules (22, 23) sont montées dans le boîtier extérieur (1 ) par l'intermédiaire de paliers rotatifs (35) du côté des extrémités.

6. Dispositif de fixation selon l'une quelconque des revendications 1 à 5, **caractérisé en ce que** le levier de serrage (6), monté rotatif contre le boîtier extérieur (1), est muni d'un boulon d'entraînement (40), qui est parallèle à l'axe de palier (36) et s'étend sensiblement verticalement en dessous de celui-ci lorsqu'il est en position de serrage et qui, pour déplacer vers le haut la cage de serrage (18) au moment du pivotement du levier de serrage dans sa position d'ouverture, s'engage tout comme l'axe de palier (36) dans des rainures en L ménagées dans les parois longitudinales (20) de la cage de serrage (18) sensiblement en forme de U.

7. Dispositif de fixation selon l'une quelconque des revendications 1 à 6, **caractérisé en ce que** le levier de serrage (6) dans la zone du palier est muni de cames d'excentrique (25) destinées à serrer la cage de serrage (18) vers le bas dans la position de prise avec les branches extérieures des bascules (22, 23).

8. Dispositif de fixation selon la revendication 7, **caractérisé en ce que** la paroi supérieure (28) de la cage de serrage (18) est munie dans la zone du palier du levier de serrage (6) d'un évidement transversal (27), de telle sorte que les cames d'excentrique (25) latérales peuvent venir en appui sur les bords supérieurs (26) libres des parois longitudinales (20) de la cage de serrage (18).

9. Dispositif de fixation selon l'une quelconque des revendications 1 à 8, **caractérisé en ce que** sur le levier de serrage (6) est formée une saillie de déblocage en forme de clavette, destinée à écarter par pivotement les mâchoires de serrage (9, 10) dans leur position de déblocage au moment de l'ouverture du levier de serrage (6).

10. Dispositif de fixation selon l'une quelconque des revendications 1 à 9, **caractérisé en ce que** les branches (2, 3) de l'étrier d'assemblage (4) passent à travers un rail étanche (8), qui est agencé en dessous du fond du boîtier extérieur et qui, pouvant coulisser avec l'étrier d'assemblage (4), assure l'étanchéité de la fente longitudinale dans le fond du coffre (7).

11. Dispositif de fixation selon la revendication 10, **caractérisé en ce que** le rail étanche est réalisé en plusieurs parties pouvant coulisser les unes vers les autres de manière télescopique.
